Europäisches Patentamt

European Patent Office

Office européen des brevets

(11) Publication number: **0 380 302**
**A2**

## EUROPEAN PATENT APPLICATION

(21) Application number: **90300702.9**

(22) Date of filing: **23.01.90**

(51) Int. Cl.5: **F16J 15/32**

(30) Priority: **23.01.89 US 300610**

(43) Date of publication of application:
**01.08.90 Bulletin 90/31**

(84) Designated Contracting States:
**DE FR GB NL**

(71) Applicant: **SEISMIC SYSTEMS, INC.**
**8925 Lipan**
**Houston, Texas 77063(US)**

(72) Inventor: **Pignerol, Herve Y.**
**9 Les Adrets Du Pilon Le Revest**
**F-83200 Toulon(FR)**

(74) Representative: **Frankland, Nigel Howard**
**FORRESTER & BOEHMERT**
**Widenmayerstrasse 4/l**
**D-8000 München 22(DE)**

(54) **High pressure piston sealing system.**

(57) A piston head, moveable within a co-operating cylinder hass an elastic sealing ring mounted in a groove formed in the cylinder, with two adjacent bearing rings, there being a cap ring between the bearing rings surrounding the elastic sealing ring, the bearing rings and cap ring forming a substantially flush surface to engage the slide surface of the cylinder.

FIG.1

EP 0 380 302 A2

## High Pressure Piston Sealing System

THE PRESENT INVENTION relates to a high pressure piston sealing system. More specifically, the present invention relates to a piston sealing system adapted for rigorous marine applications which prevent or inhibit the use of a seal lubricant.

In a variety of applications incorporating the use of a piston or similar reciprocating member, it is necessary to establish a dynamic seal between a moving or reciprocating member and a stationary element to prevent the flow of gases or fluids therebetween. This need is particularly accentuated in applications where high pressures or high temperatures are involved, or where other rigorous and hostile conditions exist.

To establish such a seal, a variety of designs have evolved. These designs generally incorporate the use of an O-ring or similar elastic element placed about the outer periphery of the reciprocating element. The use of an O-ring in rigorous, high speed applications, however, presents a number of disadvantages. In such applications, the seal is subjected to a variety of stresses as determined by such varying parameters as differential pressure, precompression of the O-ring, material and hardness of the O-ring, roughness of the bore in which the O-ring operates, relative spped at which the O-ring moves through the bore, and degradation factors via chemical agents, etc. Further, if the O-ring or similar elastic element is to function satisfactorily, the clearance between the reciprocating elements must be minimal. This low spacing between the reciprocating members in conjunction with one or more of the above-mentioned factors places the O-ring or elastic seal under considerable lateral friction, often causing the seal to "roll up" or tear.

To overcome this problem, a seal lubricant is often used, said lubricant being applied to the interior of the bore, or to the O-ring itself. Such a lubricant, however, is not useful in applications where the sealing surface are exposed to the marine environment. In such cases, the lubricant will rapidly wash away in a few strokes of the reciprocating member.

A variety of seal designs have been developed to overcome the above-mentioned problems of tearing and rolling. In one design, an O-ring is disposed in a cavity or groove and fitted with a rigid cap ring over its contacting surface. Such a design is seen, for example, in US-A-4,749,202. In other designs, especially those adapted for extreme high pressure applications, the combination O-ring and cap ring are laterally buttressed by appropriately positioned anti-extrusion rings. In such a design, the O-ring is protected both from direct frictional wear as well as from lateral forces common in applications involving a closely tolerenced or tightly fitting reciprocating element.

Disadvantages with these designs include the special tooling necessary to position and remove the O-rings, buttressing or bearing rings and cap rings which have been positioned about the piston or other reciprocating element. The need for such tooling is especially undesirable when the sealing assembly must be quickly removed or replaced, e.g. on board a marine vessel.

A further disadvantage with such sealing systems includes the need in many embodiments to machine the piston or other sealing element in multiple pieces so as to allow for the ready removal or replacement of the sealing elements. Some seal designs have also been developed to overcome this problem. However, these designs dictate the use of hot oils or other hot inert fluids to soften the sealing members so that they may be placed about the reciprocating element. This process is both time consuming and detrimentally effects the sealing properties of the elements.

The present invention seeks to reduce or obviate the above described and other disadvantages of prior art sealing systems.

According to one aspect of this invention there is provided a high pressure sealing system comprising a cylinder defining an axially extending chamber with a slide surface; a piston moveable in said chamber across said slide surface, wherein said piston has a primary annular groove disposed therein, said groove having a stepped surface defining a raised surface disposed between two secondary grooves; an elastic ring disposed in said annular groove about said raised surface; two bearing rings disposed in said secondary grooves such as to form a third groove therebetween which accommodates the elastic ring; a cap ring situated over said elastic ring and disposed in the third groove formed between said bearing rings, said cap ring in combination with said bearing rings forming a substantially flush surface adapted to sealingly contact said slide surface.

According to another aspect of this invention there is provided a high pressure sealing system comprising a stationary member having a bore disposed therethrough, said bore defining an axially extending chamber with a slide surface; a piston moveable in said chamber across said slide surface, wherein said piston has a primary annular groove disposed therein, said groove having a stepped surface defining a raised surface disposed between two secondary grooves; an elastic, precompressed ring disposed in said annular groove about said raised surface; two bearing rings disposed in said secondary grooves such as to form a third groove therebetween, and a cap ring situated over said elastic ring and disposed in the third groove formed between said bearing rings, said cap ring in combination with said bearing rings forming a flush uniform contact surface with said bore.

Preferably said raised surface is provided with a curvilinear upper sealing surface.

Conveniently the curvilinear surface describes an arc of substantially the same radius as the cross-section of the elastic ring.

Advantageously the elastic ring when mounted on the raised surface defines an outer diameter substantially equal to the outer diameter of the piston.

Conveniently the cap has a peripheral annular groove.

Preferably the bearing rings are each provided with an angled slot

Advantageously the elastic ring is made of urethane or bunan.

Conveniently the bearing rings are made of nylon and the cap ring is made of polyethylene.

In one embodiment the piston is mounted on a shaft which carries at least one more identical piston.

Preferred embodiments of the invention provide a durable, high pressure sealing system, which does not require the use of special tooling during placement and replacement, and further allows single piece fabrication of the piston or reciprocating sealing element on which it is applied. Further, the design described below, by way of example, is completely operable without the need for seal lubricants.

A preferred sealing system in accordance with the invention generally consists of an energised (i.e. compressed) elastic ring fitted into a specially designed retention groove formed in the piston. This retention groove comprises a higher step disposed between two grooves such as to form a pedestal. The pedestal itself is provided with a curvilinear top surface to accommodate the outer diameter of an O-ring. Due to such a curvilinear sealing surface, maximum sealing surface area between the O-ring and the reciprocating element is maintained. When positioned atop the pedestal, the outer diameter of the O-ring closely approximates the outer diameter of the reciprocating element. In such a fashion, minimum deformation of the O-ring is required to secure it in place.

The grooves formed on either side of the pedestal accommodate bearing rings. These rings, when situated in their respective grooves, preferably form a guiding surface having an outer diameter which closely contacts the interior of the cylinder wall. When in place, the bearing rings form a secondary groove, the bottom of which is formed by the O-ring fitted atop the upper step or pedestal. This secondary groove accommodates a cap ring. Preferably, the combination cap ring and bearing rings form a flush, uniform sealing and guiding surface when positioned in place along the reciprocating element.

The preferred embodiments of the present invention have a number of advantages over the art. One such advantage is the enhanced wear life of the seal even under rigorous, high pressure applications. A second advantage is the ease with which the seal of the system can be placed and replaced in position on the reciprocating element, without the need for special tooling or hot inert fluids. Another advantage is the ability of the seal to function without the need for a seal lubricant. Yet another advantage is the ability of the seal to allow the assembly of a double piston made from one solid part and including, between the two pistons, a component with a smaller diameter than the bore in which the piston slides. This ability to utilise a single-part, double piston simplifies the design of such part while simultaneously reducing the cost of assembly while increasing reliability.

One embodiment of the invention will be herein described, by way of example, with reference to the accompanying drawings in which:

FIGURE 1 is a side view of a sealing system in a cylinder bore,

FIGURE 2 is a detailed side view of part of the piston component of the sealing system of Figure 1, and

FIGURE 3 is an exploded, perspective view of certain components of the sealing system of Figure 1.

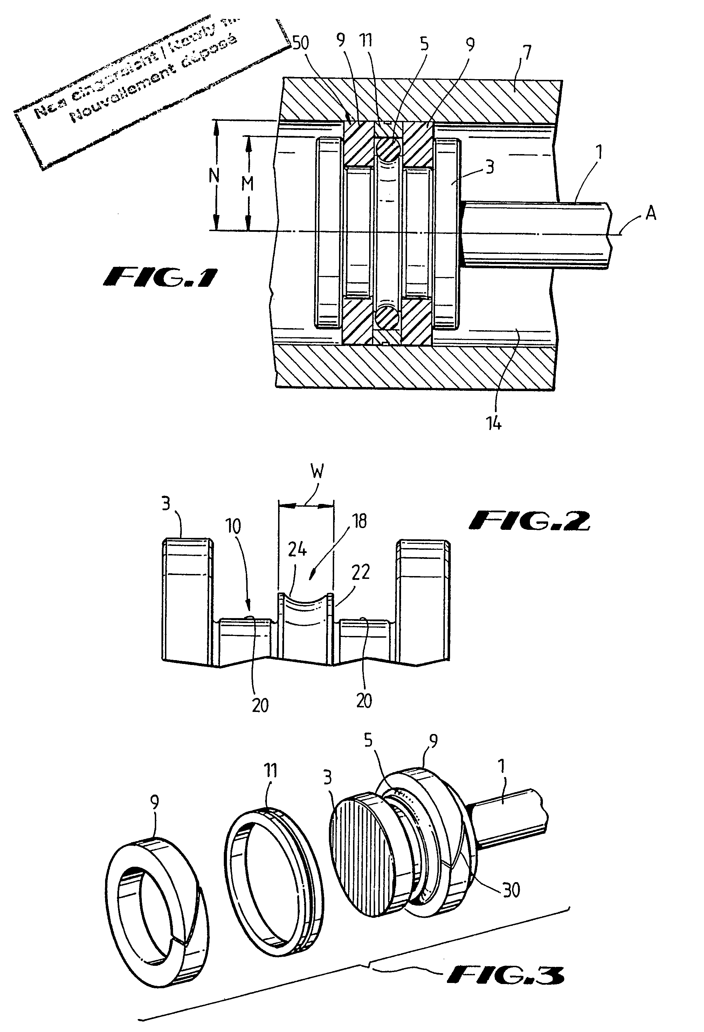

Figure 1 generally illustrates a preferred embodiment of the present invention. In Figure 1, a piston 3 is slidably fitted within a cylindrical bore 14 formed within a stationary member 7, said piston 3 being moveable via a piston rod 1 which, in turn, is operably coupled to an actuation means or the like (not shown).

The piston is formed by a piston head 3 which has been illed, cast, or turned to define a three-tiered primary groove 18. Groove 18 may be best seen by reference to Figure 2. Groove 18 generally comprises an interior tier or pedestal member 22 disposed between two secondary or bearing grooves 20. As shown, pedestal 22 describes a raised surface in relation to the grooves 20. Preferably, the secondary or bearing grooves 20 are of substantially equal depth and width to accommodate uniform bearing rings 9, as will be further discussed herein.

Referring to Figures 1 and 2, pedestal 22 is designed to accommodate an O-ring 5 of a desired diameter D. In such a fashion, the minimum width W of pedestal 22 is somewhat determined by this diameter D. Preferably, pedestal 22 defines a curvilinear upper sealing surface 24, the arc of said curve determined by the diameter D of the O-ring 5. Thus, the radius of the arc of the curve is substantially equal to the radius of the cross-section of the O-ring. Use of such a curved upper surface 24 increases the contact surface between the O-ring 5 and the pedestal 22 and hence enhances the sealing effect between the piston 3 and the O-ring 5.

The sealing pedestal 22 is adapted to receive an O-ring of a prescribed diameter D so as to enhance a favourable seal between ring 5 and pedestal 22 upon insertion in bore 14. Preferably, the combination pedestal 22 and O-ring 5 describe a sealing surface with a maximum radius substantially equal to the radius M of the piston head 3 as measured from axis A.

To provide topical support and wear resistance to the O-ring 5, a slot-free cap ring 11 is provided to complete the sealing system, said ring being sized to fit between the bearing rings 9 and over O-ring 5 to form a tight flush sealing surface with the stationary member 7 as illustrated in Figure 1. Preferably, this sealing surface has a uniform radius N as measured from axis A so as to ensure favourable sealing properties in bore 14. The cap 11 has a peripheral annular groove.

It is contemplated that the O-ring adapted for use in the present system is of generally conventional design. However, other specialised designs for the O-ring may be used commensurate with desired sealing needs in the bore 14. The O-ring 5 is preferably comprised of urethane or bunan. Such a material is compressed to form the O-ring, but is yet sufficiently elastic to be stretched over the piston head 3 during assembly. The bearing and cap rings are preferably comprised of nylon and polyethylene, respectively. Such material is generally not sufficiently elastic under room temperatures to allow deformation of the rings for placement on piston 3. To allow for placement about piston 3, bearing rings 9 are preferably each provided with an angled cut or slot 30, (which serves to break the ring) or the like to allow placement of the rings in their respective grooves about piston 3. In such a fashion, a conventional screwdriver or other similar tool may be introduced into the slot 30 to pry the ring 9 out of the groove 20 when removal or replacement is desired.

The assembly of the present system about the reciprocating is conducted as follows, although alternative assembly steps are envisioned. Beginning at the end of the sealing surface or groove 18 nearest the connecting rod 1, one bearing ring 9 is deformed, with the help of slot 30, and positioned in its respective groove 20. This is accomplished by widening the slot 30 by hand so that the inner diameter of ring 9 is such as to allow placement over the piston head 3. The O-ring 5 is next positioned on the curvilinear surface 24 defining the upper portion of pedestal 22. The cap ring 11 is then positioned on top of O-ring 5. Finally, the second bearing ring 9 is fitted into its respective groove in the same manner earlier described, completing the sealing system. The resulting system now has a smooth, flush sealing and guiding surface.

The shaft 1 is of a lesser diameter than the piston head 3. While the shaft 1 is shown with a piston head 3 at one end, the shaft may carry more piston heads at positions along its length if desired.

## Claims

1. A high pressure sealing system comprising a cylinder(14) defining an axially extending chamber with a slide surface; a piston(3) moveable in said chamber across said slide surface, characterised in that said piston has a primary annular groove(18) disposed therein, said groove having a stepped surface defining a raised surface(24) disposed between two secondary grooves(20); an elastic ring(5) disposed in said annular groove(18) about said raised surface(24); two bearing rings (9) disposed in said secondary grooves(20) such as to form a third groove therebetween which accommodates the elastic ring(5); a cap ring(11) situated over said elastic ring and disposed in the third groove formed between said bearing rings, said cap ring(11) in combination with said bearing rings-(9) forming a substantially flush surface adapted to sealingly contact said slide surface.

2. A high pressure sealing system comprising a stationary member(14) having a bore disposed therethrough, said bore defining an axially extending chamber with a slide surface; a piston(3) moveable in said chamber across said slide surface, characterised in that said piston has a primary annular groove(18) disposed therein, said groove having a stepped surface defining a raised surface(22) disposed between two secondary grooves(20); an elastic, precompressed ring(5) disposed in said annular groove about said raised surface(22); two bearing rings(9) disposed in said secondary grooves(20) such as to form a third groove therebetween, and a cap ring(11) situated over said elastic ring(5) and disposed in the third groove formed between said bearing rings, said cap ring in combination with said bearing rings forming a flush uniform contact surface with said bore.

3. The high pressure sealing system of Claim 1 or 2 wherein said raised surface(24) is provided with a curvilinear upper sealing surface.

4. The high pressure sealing system of Claim 3 wherein the curvilinear surface describes an arc of substantially the same radius as the cross-section of the elastic ring.

5. The high pressure sealing system of Claim 1 or Claim 2 wherein the elastic ring(5) when mounted on the raised surface (22) defines an outer diameter(M) substantially equal to the outer diameter of the piston.

6. The high pressure sealing system according to any one of the preceding Claims wherein the cap(11) has a peripheral annular groove.

7. The high pressure sealing system according to any one of the preceding Claims wherein the bearing rings(9) are each provided with an angled slot(30).

8. The high pressure system according to any one of the preceding Claims wherein the elastic ring is made of urethane or bunan.

9. The high pressure system according to any one of the preceding Claims wherein the bearing rings (9) are made of nylon and the cap ring(11) is made of polyethylene.

10. The high pressure system according to any one of the preceding Claims wherein the piston(3) is mounted on a shaft(1) which carries at least one more identical piston(3).

**FIG.1**

**FIG.2**

**FIG.3**